Europäisches Patentamt

European Patent Office

Office européen des brevets

(11) Publication number: **0 171 291 B1**

(19)

# EUROPEAN PATENT SPECIFICATION

(12)

(45) Date of publication of the patent specification:
01.03.89

(51) Int. Cl.⁴: **G 01 G 19/32**, G 01 G 13/18, B 65 D 90/66

(21) Application number: 85305654.7

(22) Date of filing: 08.08.85

(54) **Device for opening and closing hoppers.**

(30) Priority: 08.08.84 JP 164788/84

(43) Date of publication of application:
12.02.86 Bulletin 86/7

(45) Publication of the grant of the patent:
01.03.89 Bulletin 89/9

(84) Designated Contracting States:
DE FR GB IT

(56) References cited:
EP-A- 0 072 707
EP-A- 0 075 479
US-A- 4 193 465

(73) Proprietor: ISHIDA SCALES MFG. CO. LTD., 44, Shogoin Sannou-cho Sakyo-ku, Kyoto-shi Kyoto (JP)

(72) Inventor: Konishi, Satoshi, 1922-284, Noji-cho, Kusatsu-shi Shiga (JP)

(74) Representative: Fane, Christopher Robin King et al, HASELTINE LAKE & CO. Hazlitt House 28 Southampton Buildings Chancery Lane, London, WC2A 1AT (GB)

EP 0 171 291 B1

## Description

The present invention relates to a device for opening and closing hoppers, such as can be used in combinatorial weighing apparatus.

EP-A2-0 072 707 shows a combinatorial weighing apparatus of a kind having a plurality of weighing machines arranged in a circular pattern and having weighing hoppers for being supplied with articles or pieces to be weighed, the articles being weighed by the weighing machines. In operation, a combinatorial arithmetic operation is effected on the weight values from the weighing machines. A combination of computed weights which is equal to a target weight or closest to the target weight in excess thereof is selected, and the articles in the weighing hoppers of those weighing machines which give such a combination of computed weights are discharged.

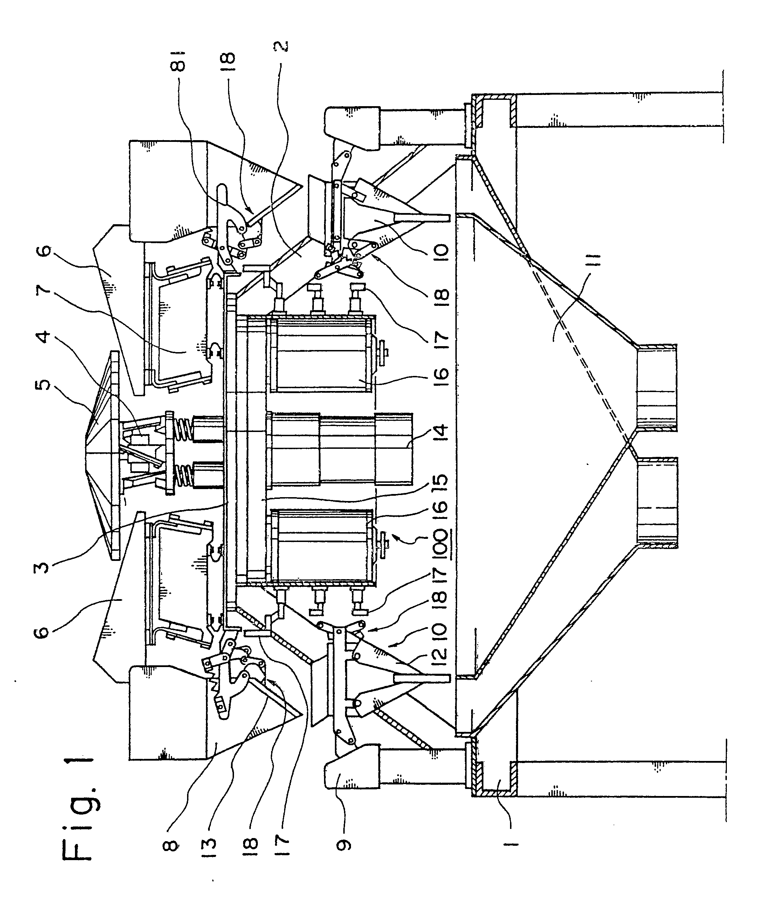

Fig. 1 of the accompanying drawings schematically shows such a combinatorial weighing apparatus as a whole. The combinatorial weighing apparatus includes a frame 1, a support base 3 mounted on the upper end of a subframe 2 fixed at its lower end to the frame 1, and a conical distributive or dispersive table 5 mounted by an electromagnetic vibrator 4 centrally on the support base 3. The conical dispersive table 5 serves to supply articles or pieces charged from a supply conveyor (not shown) in a dispersed fashion into a plurality of radial troughs 6 arranged around the dispersive table 5. The radial troughs 6 are mounted by respective electromagnetic vibrators 7 on the support base 3. The distributive table 5 and the radial troughs 6 jointly serve as a means for supplying the articles to be weighed.

A plurality of pool hoppers 8 are disposed radially outwardly of the radial troughs 6, respectively, and arranged in a circular pattern, the pool hoppers 8 being mounted by brackets 81, respectively, on the support base 3. The pool hoppers 8 have openable and closable covers 13, respectively. Below the pool hoppers 8, there are positioned weighing hoppers 10 having respective openable and closable covers 12 and attached respectively to weight detectors 9 each installed on the frame 1 and comprising a load cell. The weight detectors 9 and the weighing hoppers 10 jointly constitute weighing machines.

A hopper drive device 100 is mounted on the lower surface of the support base 3 for opening and closing the covers 13, 12 of the pool hoppers 8 and the weighing hoppers 10. The hopper opening and closing device 100 is composed of a drive means comprising a motor 14, a gear mechanism 15 for transmitting the drive force fromt the motor 14, and a plurality of cam link mechanisms 16 for transmitting the power from the gear mechanism 15 to a plurality of push rods 17. The covers 13, 12 can be opened and closed by link mechanisms 18 driven by back-and-forth movement of the push rods 17.

A collection chute 11 is disposed downwardly of the weighing hoppers 10 and supported on the frame 1 for supplying the articles discharged from the weighing hoppers 10 to a next processing station or a packaging apparatus.

Operation of the combinatorial weighing apparatus shown in Fig. 1 will be described below.

The articles dropped from the non-illustrated supply conveyor onto the central portion of the dispersive table 5 are progressively moved toward the outer peripheral edge of the dispersive table 5 which is vibrated by the electromagnetic vibrator 4, and then are dispersively supplied into the radial troughs 6. The articles introduced in the radial troughs 6 are displaced toward the outer peripheral edges of the radial troughs 6 that are vibrated by the electromagnetic vibrators 7, and then are fed into the associated pool hoppers 8. When the covers 13 are opened, the articles are charged from the pool hoppers 8 into the lower weighing hoppers 10, respectively. The articles charged into the weighing hoppers 10 are weighed by the respective weight detectors 9. The weight detectors 9 then issue detected weight signals to a control unit comprising a microcomputer (not shown). The control unit effects a combinatorial arithmetic operation on the weight signals from the weight detectors 9 to select a combination of computed weight values which is equal to a target weight or closest to the target weight in excess thereof. The control unit then issues a discharge signal to the hopper opening and closing device 100 for opening the covers 12 of those weighing hoppers 10 which give such a combination of computed weight values. The hopper drive device 100 to opens the covers 12 of the selected weighing hoppers 10 to discharge the articles therefrom into the collection chute 11. After the articles are discharged from the selected weighing hoppers 10, the control unit issues a control signal to the hopper drive device 100 for opening the covers 13 of those pool hoppers 8 which are associated respectively with the weighing hoppers 10 from which the articles are discharged. In response to the control signal, the hopper opening and closing device 100 opens the covers 13 of those pool hoppers 8 to allow them to supply articles into the emptied weighin hoppers 10. New articles are then charged from the corresponding radial troughs 6 into the pool hoppers 8 from which the articles have been supplied to the weighing hoppers 10.

The covers 12, 13 of the weighing and pool hoppers 10, 8 are opened and closed by back-and-forth or linear movement of the push rods 17 of the hopper drive device 100. In particular, the push rods 17 are moved back and forth to operate the link mechanisms 18 to open and close the covers 12, 13. The hopper opening and closing device 100 of the type described is disclosed in Japanese Patent Laid-Open Publication 59(1984)-74 092 and British Patent Publication No. 2 128 173A, for example.

The rotary motion from the motor 14 in the hopper opening and closing device 100 is converted to linear motion of the push rods 17 by the cam link mechanisms 16. The motion converting cam link mechanisms 16 are quite complex in structure and hence cannot easily be maintained and serviced. The cam link mechanisms 16 make a large motion and are subjected to increased power cost requirements as they are required to move the push rods 17 linearly. Since the cam link mechanisms 16 convert circular motion to linear motion, they are subjected to large vibrations and liable to develop backlashes easily, with the result that the apparatus will be lowered in durability. The conventional hopper opening and closing device 100 is required to move the push rods 17 radially back and forth for a stroke necessary to open and close the covers 13, 12, the stroke being provided radially inwardly of the pool hoppers 8 and the weighing hoppers 10. Therefore, the pool hoppers 8 and the weighing hoppers 10 have to be positioned radially outwardly leaving an inner space commensurate with the stroke. As a consequence, the conventional combinatorial weighing apparatus takes up a large space for installation. The weighing yards in factories and plants which employ the prior combinatorial weighing apparatus have therefore occupied a large space.

A useful improvement would lie in providing a device for opening and closing hoppers in a combinatorial weighing apparatus, the device comprising a hopper opening and closing mechanism with all working components thereof being rotatably or angularly movable to allow the device to be constructed simply, operated smoothly, subjected to reduced vibrations during operation, and make the overall apparatus more durable.

It is desirable to provide a device for opening and closing hoppers in a combinatorial weighing apparatus, the device having working components rotatably supported by rotational bearings to allow them to be easily sealed for water resistance, to be efficiently maintained and serviced, and to be subjected to reduced frictional resistance for minimizing any energy loss.

It is also desirable to provide a device for opening and closing the hoppers in a combinatorial weighing apparatus, the device having a hopper opening and closing mechanism which eliminates a radial stroke of its own movement to allow hoppers to be positioned more radially inwardly in a circular pattern for thereby making the combinatorial weighing apparatus compact.

According to an embodiment of the present invention, there is provided a device for opening and closing hoppers in a combinatorial weighing apparatus having a plurality of pool hoppers disposed in a circular pattern around means on a frame for supplying articles to be weighed and a plurality of weighing hoppers disposed below the pool hoppers, respectively, each of the pool and weighing hoppers having openable and closable covers. The device includes rotational drive means mounted centrally on the frame, a central drive gear drivable by the rotational drive means, a plurality of pinions held in mesh with the central drive gear, a drive shaft mounted on each of the pinions, a cam connected through clutch means to the drive shaft, a cam lever having a cam follower engaging the cam and angularly movably supported by a support shaft, a link mechanism operatively coupled to each of the covers for opening and closing the cover, and an opening and closing lever mounted on the support shaft of the cam lever for actuating the link mechanism.

Reference will now be made, by way of example, to the accompanying drawings in which:

Fig. 1 is a side elevational view, partly in cross section, of a conventional combinatorial weighing apparatus;

Fig. 2 is an enlarged vertical cross-sectional view of a hopper opening and closing device embodying the present invention; and

Fig. 3 is a plan view of the hopper opening and closing device embodying the present invention.

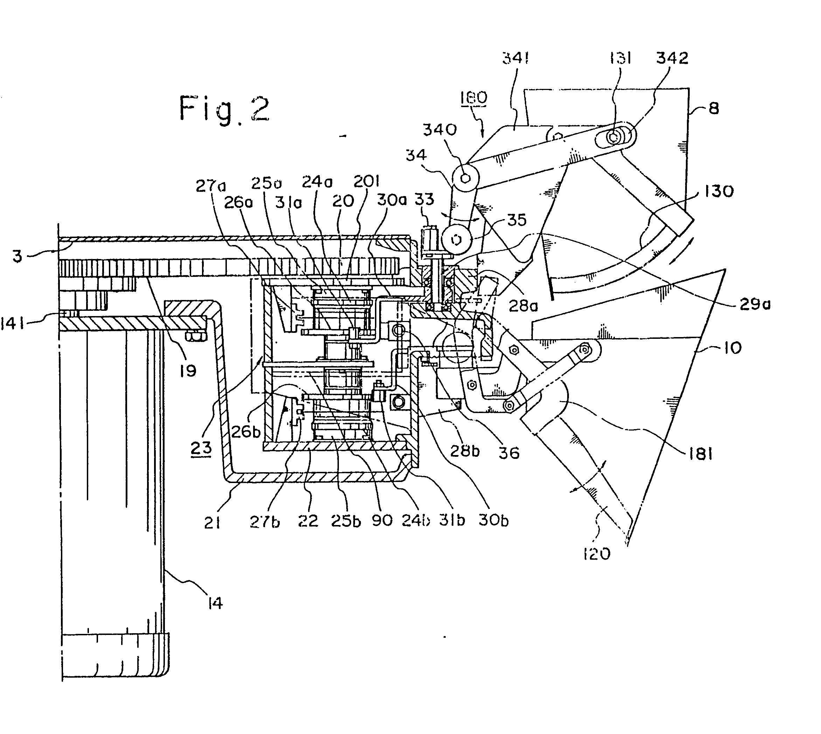

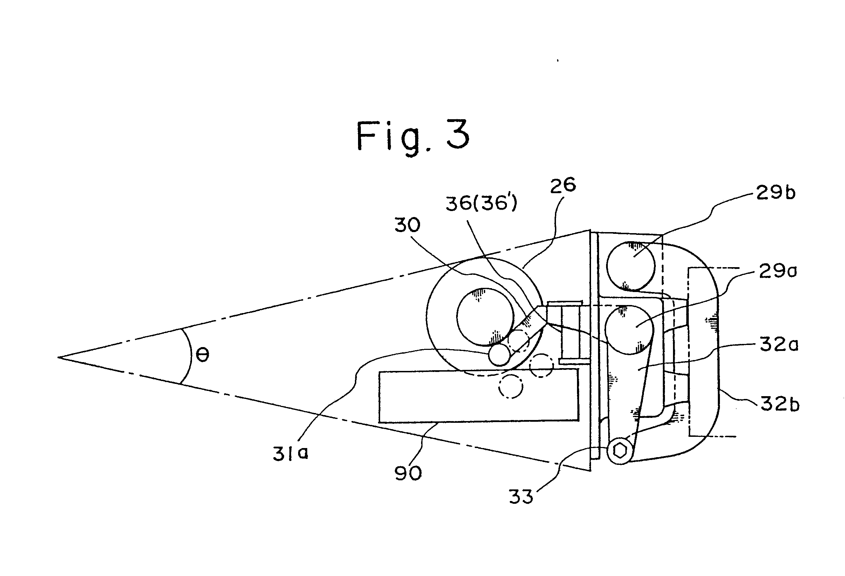

An embodiment of the present invention will hereinafter be described with reference to Figs. 2 and 3.

Those parts in Figs. 2 and 3 which are identical to those shown in Fig. 1 are designated by identical reference characters in Fig. 1.

As illustrated in Figs. 2 and 3, a gear case 21 is mounted on the lower surface of the support base 3 and supports the rotational drive means or motor 14 on its central portion. The motor 14 has a rotatable shaft 141 to which a central drive gear 19 is fixed. Around the central drive gear 19, there are disposed a plurality of actuating mechanisms 23 (only one shown in Fig. 2) associated with the pool hoppers 8 and the weighing hoppers 10.

Since the actuating mechanisms 23 are identical in construction to each other, only one of them will be described in detail. The actuating mechanism 23 has as pinion 20 meshing with the central drive gear 19 and normally drivable thereby to rotate about its own axis. A drive shaft 201 coupled at its one end to the pinion 20 ist rotatably supported in a casing 22. The casing 22 houses therein an electromagnetic clutch 24a for the pool hopper 8, an electromagnetic clutch 24b for the weighing hopper 10, an electromagnetic brake 25a for the pool hopper 8, an electromagnetic brake 25b for the weighing hopper 10, cams 26a, 26b for the pool hopper 8 and the weighing hopper 10, respectively, the cams 26a, 26b having cam grooves of prescribed configurations and being drivable by the drive shaft 201 when the electromagnetic clutches 24a, 24b are energized, and photointerrupters 27a, 27b disposed between the cams 26a, 26b and the clutches 24a, 24b for stopping the cams 26a, 26b. Each of the photointerrupters 27a, 27b comprises a light-emitting element, a photodetector, and a slit disc positioned therebetween. As the drive shaft 201 rotates, the slotted disc is rotated, and the position of the slit in the disc is detected by the photodetector to thereby detect the cam position. Since the photointerrupter is of a general construction, it will not be described in detail.

Support shafts 29a, 29b are rotatably supported by respective brackets 28a, 28b attached to the outer side of the gear case 21 (the support shaft 29b is illustrated only in Fig. 3). To the support shafts 29a, 29b, there are fixed one ends of cam levers 30a, 30b for the pool hopper 8 and the weighing hopper 10, respectively. Cam followers 31a, 31b are mounted respectively on the other ends of the cam levers 30a, 30b and engage in the cam grooves in the cams 26a, 26b. Opening and closing levers 32a, 32b have ends secured to the upper ends of the support shafts 29a, 29b, and also have opposite ends on which rollers 33 (only one shown in Figs. 2 and 3) are rotatably mounted. The lever 32b for the weighing hopper 10 ist not shown in Fig. 2, but is identical in mechanical function to the lever 32a for the pool hopper 8.

The lever 32a as related to a link mechanism 180 for the pool hopper 8 will be described below. The roller 33 rotatably mounted on the lever 32a is positioned in confronting relation to a roller 35 mounted on one end of an actuating lever 34 for actuating a cover 130 of the pool hopper 8, the rollers 33, 35 having axes crossing each other perpendicularly. The actuating lever 34 is pivotally supported in its intermediate portion by a support shaft 340 on a bracket 341. The actuating lever 34 has in its opposite end a slot 342 in which a pin 131 on the cover 130 engages.

To assure movement of the cam follower 31a on the cam lever 30a, a spring 36 extends between the lever 30a and the casing 22 for biasing the cam follower 31a against the cam 26a to enable the cam follower 31a to follow the cam 26a.

Weight detectors 90 comprising load cells (only one shown in Figs. 2 and 3) are positioned between the actuating mechanisms 23. Each of the load cells 90 has a central recess in which an inner peripheral edge of the cam 26a is loosely fitted to avoid interferene between the load cell 90 and the cam 26a, as shown in Fig. 3. Therefore, the angle $\theta$ of range about the center of the device in which the actuating mechanism 23 is located can sufficiently be reduced.

Operation of the device thus constructed will be described below. When a control signal is issued from the control unit (not shown) for discharging the articles from the weighing hopper 10, the electromagnetic clutch 24b is energized to rotate the cam 26b with the drive shaft 201. As the cam 26b rotates, the cam follower 31b engaging in the cam groove in the cam 26b moves in following relation to the cam groove. Therefore, the cam lever 30b is angularly moved about the support shaft 29b to turn the support shaft 29b about its own axis. The lever 32b is turned thereby to cause the roller 33 and a link mechanism 181 to open a cover 120 of the weighing hopper 10. The articles in the weighing hopper 10 are discharged into the collection hopper 11 from which they are delivered to the packaging apparatus. Continued rotation of the cam 26b causes the cam follower 31b, the cam lever 30b, the support shaft 29b, the lever 32b, the roller 33, and the link mechanism 181 to operate in a reverse manner to close the cover 120. When the cam 26b rotates 360°, the photointerrupter 27b is energized to actuate the electromagnetic brake 25b to stop the cam 26b and also to de-energize the electromagnetic clutch 24b, whereupon the cover 120 completes its one cycle of opening and closing operation.

After the cover 120 of the weighing hopper 10 has been opened and then closed, the control unit issues a control signal to the electromagnetic clutch 24a for the pool hopper 8 to energize the same. The cam 26a is now caused to rotate enabling the cam follower 31a engaging in the cam groove thereof to follow the cam 26a for thereby turning the lever 32a about the support shaft 29a. The support shaft 29a is also turned about its own axis to cause the rollers 33, 35 to turn the actuating lever 34 of the link mechanism 180 about the support shaft 340, thus opening the cover 130. Therefore, the articles in the pool hopper 8 are discharged and charged into the weighing hopper 10 from which the articles have been discharged. As the cam 26a is further rotated, the cam follower 31a, the cam lever 30a, the support shaft 29a, the lever 32a, the roller 33, and the link mechanism 180 to be reversed in movement to close the cover 130. When the cam 26a rotates 360°, the photointerrupter 27a is energized to actuate the electromagnetic brake 25a to stop the cam 26a and also to de-energize the electromagnetic clutch 24a, whereupon the cover 130 completes its one cycle of opening and closing operation.

The above process is repeated to allow the combinatorial weighing apparatus to effect successive cycles of combinatorial weighing.

With the arrangement of the present invention, the rotary motion of the cam 26a (26b) rotated by the drive shaft 20 upon energization of the electromagnetic clutch 24a (24b) is converted to the angular swinging motion of the lever 30a (30b) and the actuating lever 32a (32b) to operate the link mechanism 180 (181) for actuating the hopper cover 130 (120). The components of the hopper opening and closing device of the invention are therefore moved rotatably or angularly. The hopper opening and closing device can thus be simple in construction, smooth in movement, subjected to reduced vibrations, and increased in its entire durability.

Inasmuch as the components of the hopper opening and closing device are subjected to rotary or angular motion, the support shafts can be supported by rotational bearings which are simple in structure, can easily be sealed for water resistance, and can efficiently be maintained and serviced. Since there is no linear motion involved, any energy loss which would otherwise result from frictional linear motion can be minimized. The hopper opening and closing device embodying the invention does not have linearly movable members such as push rods. Therefore, the hoppers can be located closely to the actuating mechanisms by a distance commensurate with the stroke which would be required by the push rods. Consequently, the combinatorial weighing apparatus can be rendered compact, and takes up only a small space in plants and factories, with the space available therein being effectively utilized for other purposes.

Although a certain preferred embodiment has been shown and described, it should be understood that many changes and modifications may be made therein without departing from the scope of the appended claims.

**Claims**

1. A device for opening and closing hoppers in a combinatorial weighing apparatus having a plurality of pool hoppers (8) disposed in a circular pattern around means on a frame (1) for supplying articles to be weighed and a plurality of weighing hoppers (10) disposed below said pool hoppers (8), respectively, each of said pool (8) and weighing (10) hoppers having openable and closable covers (130, 120), said device comprising:
rotational drive means (14) mounted centrally on said frame (1);
a central drive gear (19) drivable by said rotational drive means (14);
a plurality of pinions (20) held in mesh with said central drive gear (19);
a drive shaft (201) mounted on each of said pinions (20);
a cam (26a, b) connected through clutch means (24a, b) to said drive shaft (201);
a cam lever (30a, b) having a cam follower (31a, b) engaging said cam (26a, b) and angularly movably supported by a support shaft (29a, b); and
a link mechanism (180, 181) operatively coupled to each of said covers (130, 120) for opening and closing the cover (130, 120); characterised by
an opening and closing lever (32a, b) mounted on said support shaft (29a, b) of said cam lever (30a, b) for actuating said link mechanism (180, 181).

2. A device according to claim 1, wherein said clutch means (24a, b) comprises a clutch (24a) associated with said drive shaft (201) for said pool hoppers (8) and a clutch (24b) associated with said drive shaft (201) for said weighing hoppers (10).

3. A device according to claim 1 or 2, including a brake (25a, b) for stopping said cam (26a, b).

4. A device according to claim 1, 2 or 3, including a bracket (28a, b) on which said opening and closing lever (32a, b) is supported by said support shaft (29a, b), said cam lever and said opening and closing lever (32a, b) being joined together.

5. A device according to any preceding claim, wherein said cam (26a), said cam follower (31a), and said cam lever (30a) associated with each of said pool hoppers (8) are substantially identical in construction to said cam (26b), said cam follower (31b), and said cam lever (30b) associated with each of said weighing hoppers (10).

**Patentansprüche**

1. Vorrichtung zum Öffnen und Schließen von Behältern in einer kombinatorischen Wägvorrichtung, die mehrere Muldenbehälter (8), die in einem kreisförmigen Muster um eine an einem Rahmen (1) befindliche Einrichtung zum Zuführen zu wägender Artikel angeordnet sind, und mehrere jeweils unter den Muldenbehältern (8) angeordnete Wägbehälter (10) aufweist, wobei jeder der Mulden- (8) und Wägbehälter (10) Deckel (130, 120) aufweist, die sich öffnen und schließen lassen, mit:
einem Drehantrieb (14), der zentral am Rahmen (1) montiert ist;
einem zentralen Antriebszahnrad (19), das durch den Drehantrieb (14) antreibbar ist;
mehreren Ritzeln (20), die in Eingriff mit dem zentralen Antriebszahnrad (19) gehalten sind;
einer an jedem der Ritzel (20) montierten Antriebswelle (201);
einer Nocke (26a, b), die durch eine Kupplungseinrichtung (24a, b) mit der Antriebswelle (201) verbunden ist;
einem Nockenhebel (30a, b) mit einem Nockenfolger (31a, b), der an der Nocke (26a, b) angreift und durch eine Stützwelle (29a, b) winklig bewegbar gestützt ist; und
einem Lenkermechanismus (180, 181), der zum Öffnen und Schließen des Deckels (130, 120) mit jedem der Deckel (130, 120) arbeitsmäßig gekoppelt ist;
gekennzeichnet durch einen Öffnungs- und Schließhebel (32a, b), der zum Betätigen des Lenkermechanismus (180, 181) an der Stützwelle (29a, b) des Nockenhebels (30a, b) montiert ist.

2. Vorrichtung nach Anspruch 1, bei der die Kupplungseinrichtung (24a, b) eine Kupplung (24a), die der Antriebswelle (201) für die Muldenbehälter (8) zugeordnet ist, und eine Kupplung (24b) aufweist, die der Antriebswelle (201) für die Wägbehälter (10) zugeordnet ist.

3. Vorrichtung nach Anspruch 1 oder 2, mit einer Bremse (25a, b) zum Stoppen der Nocke (26a, b).

4. Vorrichtung nach Anspruch 1, 2 oder 3, mit einem Arm (28a, b), an dem der Öffnungs- und Schließhebel (32a, b) durch die Stützwelle (29a, b) gestützt ist, wobei der Nockenhebel (30a, b) und der Öffnungs- und Schließhebel (32a, b) miteinander verbunden sind.

5. Vorrichtung nach einem der vorhergehenden Ansprüche, bei der die Nocke (26a), der Nockenfolger (31a) und der Nockenhebel (30a), die jedem der Muldenbehälter (8) zugeordnet sind, im wesentlichen von gleicher Konstruktion sind wie die Nocke (26b), der Nockenfolger (31b) und der Nockenhebel (30b), die jedem der Wägbehälter (10) zugeordnet sind.

**Revendications**

1. Dispositif pour ouvrir et fermer des trémies dans un appareil de pesage combiné comportant une pluralité de trémies d'accumulation (8) disposées selon un dessin circulaire autour de moyens situés sur un bâti (1) pour délivrer des articles à peser et une pluralité de trémies de pesage (10) disposées respectivement sous lesdites trémies d'accumulation (8), chacune desdites trémies d'accumulation (8) et de pesage (10) comportant des couvercles susceptibles de s'ouvrir et de se fermer (130, 120), ledit dispositif comprenant:
– un moyen d'entraînement rotatif (14) monté de façon centrale sur ledit bâti (1);

– une roue dentée d'entraînement centrale (19) susceptible d'être entraînée par ledit moyen d'entraînement rotatif (14);

– une pluralité de pignons (20) maintenus engrenés avec ladite roue dentée d'entraînement centrale (19),

– un arbre d'entraînement (201) monté sur chacun desdits pignons (20);

– une came (26a, b) reliée audit arbre d'entraînement (201) par l'intermédiaire d'un embrayage (24a, b);

– un levier de came (30a, b) comportant un galet de came (31a, b) en contact avec ladite came (26a, b) et susceptible d'être déplacé angulairement par un arbre de support (29a, b);

et un mécanisme de liaison (180, 181) relié fonctionnellement à chacun desdits couvercles (130, 120) en vue d'ouvrir et de fermer les couvercles (130, 120);

caractérisé par:

un levier d'ouverture et de fermeture (32a, b) monté sur ledit arbre de support (29a, b) dudit levier de came (30a, b) destiné à actionner ledit mécanisme de liaison (180, 181).

2. Dispositif selon la revendication 1, dans lequel ledit moyen d'embrayage (24a, b) comprend un embrayage (24a) associé audit arbre d'entraînement (201) desdites trémies d'accumulation (8) et un embrayage (24b) associé audit arbre d'entraînement (201) desdites trémies de pesage (10).

3. Dispositif selon la revendication 1 ou 2, comprenant un frein (25a, b) destiné à arrêter ladite came (26a, b).

4. Dispositif selon la revendication 1, 2 ou 3, comprenant un support (28a, b) sur lequel ledit levier d'ouverture et de fermeture (32a, b) est supporté par ledit arbre de support (29a, b), ledit levier de came (30a, b) et ledit levier d'ouverture et de fermeture (32a, b) étant reliés ensemble.

5. Dispositif selon une des revendications précédentes, dans lequel ladite came (26c), ledit galet de came (31a), et ledit levier de came (30a) associé à chacune desdites trémies d'accumulation (8) sont de construction sensiblement identique à celle de ladite came (26b), dudit galet de came (31b), et dudit levier de came (30b) associé à chacune des trémies de pesage (10).

Fig. 1

Fig. 2

EP 0 171 291 B1

# Fig. 3